# FASCICULE DE BREVET EUROPEEN

(11) **EP 3 985 457 B1**
(45) Date de publication et mention de la délivrance du brevet: **07.06.2023**
(21) Numéro de dépôt: 20202327.1
(22) Date de dépôt: 16.10.2020
(51) Int. Cl.: G04G 21/02, G04D 7/00, G04D 99/00

(54) **ENSEMBLE DE MESURE DU DEGRE D'HUMIDITE RELATIVE A L'INTERIEUR D'UN BOITIER DE MONTRE**
EINHEIT ZUM MESSEN DES RELATIVEN FEUCHTIGKEITSGRADS IM GEHÄUSE EINER ARMBANDUHR
DEVICE FOR MEASURING THE DEGREE OF RELATIVE HUMIDITY INSIDE A WATCH CASE

(43) Date de publication de la demande: 20.04.2022
(73) Titulaire: The Swatch Group Research and Development Ltd, 2074 Marin (CH)
(72) Inventeur: DUBUGNON, Dominique, 1162 Saint-Prex (CH); BLATTER, Cédric, 1291 Commugny (CH)
(74) Mandataire: ICB SA

(56) Documents cités:
- EP-A1- 3 598 246
- CH-A- 314 386
- US-A- 3 802 251
- US-A1- 2018 181 075

## Description

### DOMAINE TECHNIQUE DE L'INVENTION

L'invention concerne un ensemble de mesure du degré d'humidité relative à l'intérieur d'un boîtier de montre.

### ETAT DE LA TECHNIQUE

L'étanchéité d'une montre est mesurée en bars (le bar est une unité de pression, 1 bar équivalant à 1 atmosphère (atm). Le degré d'étanchéité d'une montre est souvent indiqué en mètres (m). Les montres désignées comme étanches sont destinées à une utilisation quotidienne courante qui doit garantir une résistance à l'eau, dans des activités telles que par exemple la natation, ou plus simplement sous la douche. Les montres dites de plongée doivent respecter des normes plus strictes, et garantir selon la norme actuelle l'étanchéité à une profondeur minimum de 100 m.

Pour garantir l'étanchéité, les montres sont en général munies d'un jeu de joints d'étanchéité positionnés dans les points d'assemblage de certaines pièces de la montre, telles que la glace, la lunette et le fond de la montre, ainsi que d'éléments mobiles tels que la couronne et les boutons poussoir. Avec le temps et l'utilisation, les propriétés mécaniques des joints se modifient et l'étanchéité de la montre peut parfois se détériorer. La montre devient alors plus perméable à l'eau ou à la vapeur d'eau. Les conséquences peuvent être des phénomènes de condensation sur la face intérieure de la glace de la montre, ou pire, d'oxydation de certains composants métalliques ou de dégradation de certains composants polymères. Il existe ainsi un besoin de pouvoir surveiller de temps en temps le degré d'humidité relative dans la montre sans forcément devoir l'ouvrir, une ouverture du boîtier de montre nécessitant un changement systématique des joints et faisant intervenir un horloger ce qui est coûteux. Un excès de vapeur d'eau dans la montre peut en effet indiquer qu'un ou plusieurs joints doivent être remplacés à court ou moyen terme.

Afin de répondre à ce besoin, il est connu des montres comportant un dispositif de mesure du degré d'humidité relative à l'intérieur de la montre. Un tel dispositif de mesure se présente sous la forme d'un module électronique apte à mesurer et enregistrer des valeurs de différents paramètres environnementaux, dont l'humidité relative. Du fait de la taille réduite d'un tel module électronique, ce dernier peut être agencé à l'intérieur d'un boîtier de montre et mesurer, via un capteur dédié, le degré d'humidité relative à l'intérieur du boîtier de montre. Il est ensuite possible de transmettre les valeurs d'humidité relatives mesurées à une station d'accueil de la montre par voie sans fil, typiquement par voie infrarouge ou radiofréquences. Le signal par exemple infrarouge émis par le module électronique traverse alors une portion transparente du boîtier de montre, typiquement la glace et est reçu par un capteur infrarouge de la station d'accueil. Un utilisateur de la montre peut ensuite visualiser les valeurs d'humidité relative mesurées via un ordinateur relié à la station d'accueil et muni d'un logiciel dédié ou un smartphone. Le document EP 3 598 246 A1 divulgue un dispositif de mesure de l'humidité à l'intérieur d'une montre en utilisant une fibre optique à l'intérieur de la montre qui modifie son indice de réfraction en fonction de la vapeur d'eau à l'intérieur de la montre.

Toutefois, un inconvénient d'un tel dispositif électronique de mesure est qu'il nécessite une batterie ou une pile pour pouvoir alimenter les différents composants électroniques. Un tel dispositif est ainsi très peu adapté à des montres mécaniques notamment. De plus, pour des montres électroniques, il peut pénaliser l'autonomie d'un produit ou nécessiter de prendre une pile de plus grande capacité et donc augmenter le volume de la montre.

Un autre inconvénient est qu'un tel dispositif est relativement encombrant et peu discret à l'intérieur de la montre. En outre, un tel dispositif électronique de mesure est relativement onéreux et impacte donc le coût de fabrication de la montre.

### RESUMÉ DE L'INVENTION

L'invention a donc pour but de fournir un ensemble de mesure du degré d'humidité relative présent à l'intérieur d'un boîtier de montre permettant ainsi de détecter notamment un défaut d'étanchéité d'un tel boitier et ce, à partir d'une surveillance du degré d'humidité relative dans ce boîtier sans devoir l'ouvrir. Un tel ensemble de mesure est économique, simple à mettre en oeuvre, et permet une mesure fiable et rapide du degré d'humidité relative à l'intérieur du boîtier de montre.

L'invention concerne un ensemble de mesure d'un degré d'humidité relative à l'intérieur d'une montre, selon la revendication 1.

Dans d'autres modes de réalisation :
- le module récepteur comprend un microphone à pression ou un microphone à gradient de pression ;
- le module récepteur comprend un microphone optique ;
- le microphone optique comprend une source de rayonnement électromagnétique, des éléments réfléchissants tels que des miroirs, au moins un détecteur de ce rayonnement électromagnétique et un interféromètre ;
- l'ensemble de mesure comprend un module émetteur pourvu d'une source de rayonnement lumineux apte à émettre des faisceaux lumineux vers le mouvement de la montre ;
- la source de rayonnement lumineux est une source laser ;
- l'ensemble de mesure comprend un module émetteur pourvu d'une source de rayonnement acoustique apte à envoyer un signal acoustique dans la montre en particulier vers le mouvement de cette montre ;
- le module émetteur est connecté à ladite unité de contrôle ;
- l'unité de contrôle comprend dans ses éléments de mémoire un algorithme d'apprentissage d'évaluation d'un degré d'humidité relative à l'intérieur d'une montre en fonction de caractéristiques de signatures/identités sonores issues du traitement des signaux acoustiques reçus par le module récepteur ;
- le modèle est généré par ledit algorithme exécuté par l'unité de contrôle ;
- l'unité de contrôle est configurée pour déterminer une valeur d'entrée de ce modèle qui est ici une valeur du signal acoustique mesurée par le module récepteur ;
- l'unité de contrôle est configurée pour obtenir une valeur de sortie résultant de l'exécution du modèle avec la valeur d'entrée, ladite valeur de sortie comprenant le taux de vapeur d'eau présent dans le fluide gazeux compris dans l'enceinte du boîtier ;
- le fluide gazeux est de l'air comprenant de la vapeur d'eau.

### BRÈVE DESCRIPTION DES FIGURES

Les buts, avantages et caractéristiques de cet ensemble de mesure d'un degré d'humidité relative à l'intérieur d'une montre, apparaîtront mieux dans la description suivante sur la base d'au moins une forme d'exécution non limitative illustrée par les dessins dans lesquels :
- la figure 1 est une représentation schématique d'un ensemble de mesure du degré d'humidité relative à l'intérieur d'une montre, selon un mode de réalisation de l'invention ;
- la figure 2 est une vue schématique d'une première variante de l'ensemble de mesure du degré d'humidité relative comprenant un microphone à pression et/ou un microphone à gradient de pression, selon le mode de réalisation de l'invention ;
- la figure 3 est une vue schématique d'une deuxième variante de cet ensemble de mesure comprenant le dispositif de détermination du degré d'humidité comprenant un microphone optique, selon le mode de réalisation de l'invention, et
- la figure 4 est une vue schématique d'une troisième variante de cet ensemble de mesure comprenant un module émetteur pourvu d'une source de rayonnement lumineux et/ou d'une source de rayonnement acoustique, selon le mode de réalisation de l'invention.

### DESCRIPTION DETAILLEE DE L'INVENTION

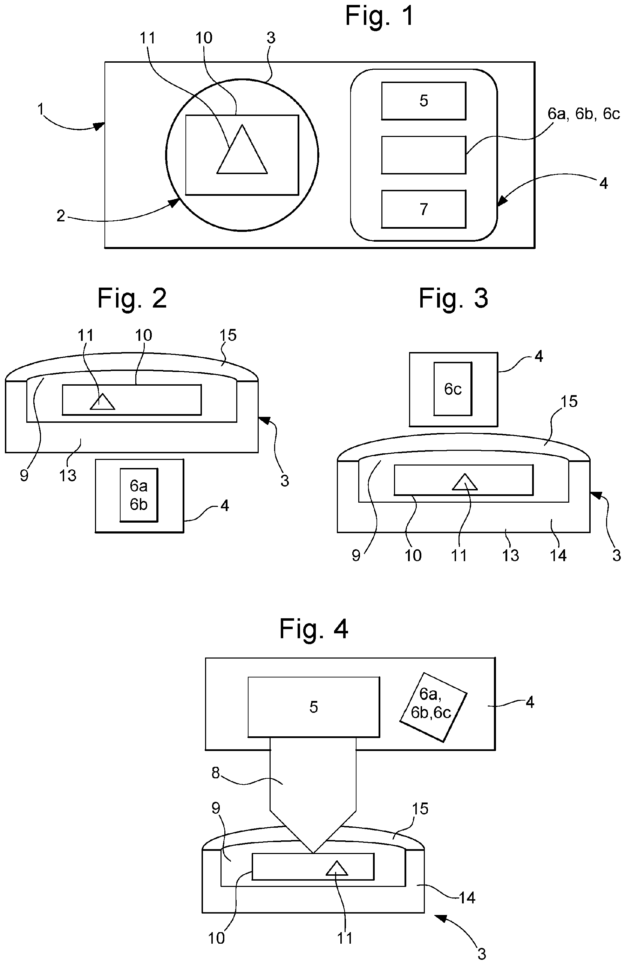

Les figures 1 à 4 représentent plusieurs variantes d'un ensemble de mesure 1 d'un degré d'humidité relative à l'intérieur d'une montre 2. On entend ici par « degré d'humidité relative », le rapport entre la pression partielle de la vapeur d'eau contenue dans l'air et la pression de vapeur saturante (ou tension de vapeur) à la même température. Autrement dit, la mesure du degré d'humidité relative correspond à une mesure du rapport entre le contenu en vapeur d'eau de l'air et sa capacité maximale à en contenir dans les mêmes conditions de température.

Cet ensemble de mesure 1 comprend la montre 2 et en particulier le boîtier 3 de montre 2, ainsi qu'un dispositif de détermination 4 du degré d'humidité présent dans l'enceinte 9 de ce boîtier 3 de la montre 2. Un tel ensemble de mesure 1 est apte à déterminer le degré d'humidité relative à l'intérieur de la montre 2 à partir d'un signal acoustique provenant d'au moins un composant horloger 11 d'un mouvement 10 de la montre. Ce composant horloger 11 peut comprendre un unique élément horloger susceptible de générer une onde sonore ou au moins deux éléments horlogers aptes à générer une onde sonore en coopérant ensemble dans le cadre du fonctionnement du mouvement 10. Ce composant horloger 11 lorsqu'il comprend plusieurs éléments horlogers peut être appelé « mécanisme horloger ». Dans ce contexte, il peut s'agir à titre d'exemple d'un mécanisme d'échappement d'une montre, d'un mécanisme de répétition minutes ou encore d'un moteur pas-à-pas d'une montre à quartz.

Dans cet ensemble de mesure1, la montre 2 peut être par exemple une montre mécanique ou encore une montre électronique notamment une montre connectée.

Le dispositif de détermination 4 de cet ensemble de mesure 1, comprend un module récepteur 6a à 6c d'au moins un signal acoustique provenant dudit au moins un composant horloger 11 du mouvement 10 agencé dans l'enceinte 9 du boîtier 3. Ce dispositif de détermination 4 comprend aussi une unité de contrôle 7 connectée à ce module récepteur 6. Dans une alternative et ainsi que nous le verrons par la suite, un tel dispositif de détermination 4 peut également comprendre un module émetteur 5 également connecté à l'unité de contrôle 7 et qui est pourvu d'une source de rayonnement lumineux et/ou d'une source de rayonnement acoustique. On notera que la source de rayonnement acoustique est apte à envoyer un signal acoustique dans la montre depuis l'environnement extérieur à celle-ci.

Un tel module émetteur 5 peut comprendre un dispositif susceptible de frapper la montre en particulier le boitier de cette dernière. En particulier, un tel dispositif peut comprendre un mécanisme susceptible d'animer au moins un marteau de sorte qu'il vienne frapper le boîtier 3 de la montre 2 afin d'engendrer un signal acoustique vers le mouvement de cette montre 2. Dans ce contexte, on comprend qu'un tel marteau est configuré pour frapper ce boîtier 3 sans l'endommager.

Dans ce dispositif de détermination 4, le module récepteur 6a à 6c d'au moins un signal acoustique provenant d'au moins un composant horloger 11 du mouvement 10, comprend au moins un transducteur électroacoustique qui est apte à convertir un signal acoustique en un signal électrique. Dans une première variante, un tel module récepteur 6a, 6b peut comprendre au moins un microphone à pression 6a ou à gradient de pression 6b généralement pourvu d'une membrane ou d'un élément piézoélectrique qui est apte à se déformer et/ou à se mouvoir sous l'effet d'un signal acoustique. Dans une deuxième variante, ce module émetteur 6c peut comprendre au moins un microphone optique 6c. Un tel microphone 6c qui est décrit plus en détail dans le document de brevet européen EP2338287B1, est un dispositif qui est apte à convertir un signal acoustique en un signal électrique et ce, à partir d'une technologie basée sur l'interférométrie. Un tel microphone 6c comprend notamment une source de rayonnement électromagnétique, des éléments réfléchissants tels que des miroirs, au moins un détecteur de ce rayonnement électromagnétique et un interféromètre tel qu'un interféromètre Fabry-Pérot ou encore un agencement Gires-Tournois. On notera que dans une autre variante de ce dispositif de détermination 4, le module émetteur 6a à 6c peut comprendre une combinaison quelconque de microphones 6a à 6c suivants : au moins un microphone à pression 6a, au moins un microphone à gradient de pression 6b et au moins un microphone optique 6c.

Dans ce dispositif de détermination 4, l'unité de contrôle 7 est connectée au module récepteur 6a, 6b, 6c et aussi le cas échéant au module émetteur 5. Cette unité de contrôle 7 est configurée pour évaluer le taux de vapeur d'eau présent dans le fluide gazeux compris dans ladite enceinte 9 en fonction dudit au moins signal acoustique reçu par le module récepteur 6a à 6c. Cette unité de contrôle 7 peut être un ordinateur et comprendre ainsi des ressources matérielles et logicielles en particulier au moins un processeur coopérant avec des éléments de mémoire. Cette unité de contrôle 7 est apte à exécuter des instructions pour la mise en oeuvre d'un programme d'ordinateur afin de contribuer à la détermination de la mesure du degré d'humidité relative dans l'enceinte 9 du boîtier 3 de la montre 2.

Dans ces conditions, une telle unité de contrôle 7 comprend dans ses éléments de mémoire un algorithme d'apprentissage connue sous l'expression anglaise « *machine learning algorithm* ». Plus particulièrement, il s'agit ici d'un algorithme d'apprentissage d'évaluation d'un degré d'humidité relative à l'intérieur d'une montre en fonction de caractéristiques de signatures/identités sonores issues du traitement des signaux acoustiques effectué par l'unité de contrôle 7. Un tel algorithme peut comprendre ou mettre en oeuvre au moins un réseau de neurones et/ou une fonction analytique et/ou un principe de régression polynomial. Un tel algorithme est apte à générer un modèle d'évaluation d'un taux de vapeur d'eau présent dans un fluide gazeux compris dans l'enceinte 9 du boîtier 3 en fonction d'au moins un signal acoustique mesuré pas le module récepteur 6a à 6c. Un tel modèle permet par sa mise en oeuvre par l'unité de contrôle 7, de déterminer une valeur caractérisant un degré d'humidité relative à l'intérieur d'une montre en fonction donc dudit au moins un signal acoustique mesuré pas le module récepteur 6a à 6c.

Cet algorithme peut faire l'objet d'un entraînement automatique encore appelé apprentissage automatique qui est de préférence supervisé. Pour ce faire, l'unité de contrôle 7 qui participe à mettre en oeuvre un tel entrainement, comprend des données d'entraînement de mesures de signaux acoustiques et des données d'entraînement de degrés d'humidité relative à l'intérieur d'une montre. Ces données d'entraînement sont le résultat de mesures réelles effectuées par exemple à partir d'un dispositif d'entraînement comprenant entre autres une sonde d'humidité agencée dans l'enceinte fermée d'un boîtier de montre similaire à celui de la présente montre ici décrite et une sonde acoustique pour mesurer des signaux acoustiques générés par une source de rayonnement lumineux et/ou une source de rayonnement acoustique dirigée (s) vers le boîtier. Ainsi cet entraînement vise à améliorer l'algorithme et en particulier le modèle qui en résulte afin de minimiser l'erreur entre « estimation et réalité » dans le cadre de l'évaluation du taux de vapeur d'eau présent dans l'enceinte du boîtier 3 à partir d'au moins un signal acoustique reçu par le module récepteur 6a, 6b, 6c.

En outre, cette unité de contrôle 7 est apte à piloter le module récepteur 6a à 6c afin de participer à l'évaluation du taux de vapeur d'eau présent dans le fluide gazeux compris dans l'enceinte 9 du boîtier 3, et est également apte à effectuer des opérations de traitement de signaux acoustiques mesurés par ce module récepteur 6a à 6c. Ces opérations de traitement permettent à cette unité de contrôle 7 de réaliser une évaluation du degré d'humidité dans l'enceinte du boîtier 3 en exécutant le modèle d'évaluation d'un taux de vapeur d'eau présent dans le fluide gazeux compris dans ladite enceinte en fonction dudit au moins un signal acoustique reçu par le module récepteur 6a, 6b, 6c. Dans ce contexte, l'unité de contrôle 7 est apte à déterminer une valeur d'entrée de ce modèle qui est ici une valeur du signal acoustique mesuré pas le module récepteur 6a à 6c afin d'obtenir une valeur de sortie résultant de l'exécution de ce modèle avec cette valeur d'entrée, ladite valeur de sortie correspondant au taux de vapeur d'eau présent dans le fluide gazeux compris dans l'enceinte du boîtier. On notera que cette unité de contrôle 7 est en particulier apte à mettre en oeuvre des opérations de traitement du signal au travers d'opérations de modulation de signal et de détection synchrone afin de déterminer cette valeur d'entrée.

Ainsi que nous l'avons évoqué précédemment, l'ensemble de mesure 1 peut aussi comprendre un module émetteur 5 qui participe à améliorer la précision de l'évaluation du degré d'humidité relative à l'intérieur de la montre. En effet, l'unité de contrôle 7 est apte à contrôler ce module émetteur 5 et le module récepteur 6a, 6b, et 6c, afin d'obtenir une estimation du degré d'humidité relative présent dans l'enceinte 9 du boîtier 3 de la montre et ce, selon un mode opératoire similaire à celui précédemment décrit.

Un tel module émetteur 5 peut être pourvu d'une source de rayonnement lumineux. Plus précisément, il est apte à émettre des faisceaux lumineux 8 vers l'enceinte 9 dudit boîtier 3 et en particulier vers le mouvement 10. Un tel module émetteur 5 peut participer à améliorer la précision de la mesure du degré d'humidité à l'intérieur de la montre. Dans ce module émetteur 5, la source de rayonnement lumineux est de préférence une source laser. Alternativement, cette source de rayonnement lumineux peut être une source lumineuse infrarouge. Ce module émetteur 5 comprend un élément de modulation de ladite source de rayonnement lumineux configuré pour engendrer au moins un signal acoustique dans ladite enceinte 9 du boîtier 3 sous l'effet des faisceaux lumineux, ici des faisceaux lasers, émis, par le module émetteur 5. Autrement dit, l'élément de modulation 5 de ladite source de rayonnement lumineux est configuré pour que ledit module émetteur 5 émette des faisceaux lumineux susceptibles d'engendrer une génération d'au moins un signal acoustique par le fluide gazeux comprenant la vapeur d'eau compris dans l'enceinte 9 du boîtier 3. En effet, les molécules du fluide gazeux, ici de l'air comprenant notamment de la vapeur d'eau, qui sont présentes dans l'enceinte 9 du boîtier 3, sont excitées à un état quantique électronique, vibrationnel ou rotationnel supérieur en absorbant le rayonnement électromagnétique constitué par ces faisceaux lumineux modulés émis par le module émetteur 5. De manière générale le dépeuplement de cet état quantique vers des états inférieurs se produit soit par fluorescence, soit par collisions, ces dernières donnant lieu à une augmentation de température du fluide gazeux due notamment à processus de transfert d'énergie. Ce processus de relaxation non radiatif se produit lorsque le temps de relaxation peut entrer en compétition avec la durée de vie radiative des niveaux d'énergie excités. Ainsi, l'élément modulateur du module émetteur 5 en modulant la source rayonnement, contribue alors à faire varier périodiquement la température de ce fluide gazeux présent dans l'enceinte 9 du boîtier 3 ce qui donne lieu à un changement de pression périodique dans cette enceinte 9 qui est à l'origine de la génération dudit au moins un signal acoustique dans cette enceinte 9. On notera que la température peut aussi moduler un indice de réfraction, ce qui peut être détecté optiquement.

Un tel module émetteur 5 est apte à émettre des impulsions lasers femtosecondes et/ou nanosecondes. De telles impulsions femtosecondes peuvent être élaborées à partir d'un laser en lumière visible ou proche infrarouge. Un tel laser peut être par exemple un laser YAG @1064nm. En particulier, on notera que le module émetteur 5 est apte à émettre en simultané ou en série plusieurs faisceaux lumineux à des longueurs d'ondes possédant des coefficients d'absorption différents dans le fluide gazeux comprenant la vapeur d'eau. En complément, on notera que ce module 5 est apte à émettre un faisceau laser de type YAG pompé optiquement au moyen de lampes flash ou de diodes laser, ou encore de type laser à colorant plus connu sous la dénomination en langue anglaise « dye laser ». On notera que le module émetteur 5 peut aussi comprendre un oscillateur paramétrique optique connu également sous l'acronyme « OPO ». Cet oscillateur est une source de lumière cohérente et monochromatique qui est de préférence utilisée pour produire des longueurs d'onde là où des lasers font défaut.

Dans cette configuration, cette unité de contrôle 7 assure le pilotage des modules 5, 6a, 6b, 6c, afin de participer à l'estimation de la mesure du degré d'humidité relative dans l'enceinte 9 de la boîtier 3, et est également apte à déterminer des valeurs d'entrée relatives à des signaux acoustiques mesurés par le module récepteur 6a à 6c. L'unité de contrôle 7 est en particulier apte à mettre en oeuvre des opérations de traitement du signal au travers d'opérations de modulation de signal et de détection synchrone. Ainsi, l'unité de contrôle 7 est apte à déterminer des valeurs de sortie résultant de l'exécution du modèle avec ces valeurs d'entrée, lesdites valeurs de sortie correspondant au taux de vapeur d'eau présent dans le fluide gazeux compris dans l'enceinte du boîtier.

On notera que le dispositif de détermination 4 peut comprendre des capteurs de température permettant de mesurer la température de la montre et aussi celle régnant dans l'environnement dans laquelle cette dite montre est située. Ces capteurs sont connectés à l'unité de contrôle 7 et participent à l'estimation du degré d'humidité dans le boîtier 3. En effet, cette estimation est notamment réalisée lorsque la température de la montre et celle de son environnement sont sensiblement les mêmes ou strictement les mêmes.

Dans cet ensemble 1, la montre est donc pourvue du boîtier 3. Un tel boîtier 3 comporte une carrure 14 qui est par exemple de forme annulaire et qui est munie d'un rebord annulaire supérieur sur lequel s'appuie une glace 15 de ce boîtier 3. Cette glace 15 encore appelée « verre » peut être de manière non limitative et non exhaustive un verre minéral ou encore un verre saphir présentant une épaisseur qui est configurée pour permettre tout du moins une transmission des faisceaux lumineux du module émetteur.

Dans le boîtier 3 de montre 2 pris en exemple aux figures 2 à 4, sa configuration est sensiblement circulaire. Toutefois, l'invention n'est nullement limitée à une telle configuration.

Dans l'ensemble de mesure 1, le module récepteur 6a, 6b lorsqu'il comprend un microphone à pression 6a ou à gradient de pression 6b peut être agencé en regard de l'une quelconque des différentes parties du boîtier 3 à savoir en regard du fond 13, de la carrure 14 ou de la glace 15. Lorsque ce module récepteur 6c comprend un microphone optique 6c il est alors disposé en regard de la glace 15 du boîtier 3.

On notera dans une variante que le module récepteur 6c connecté à l'unité de contrôle 7 peut être apte à mesurer les vibrations de la carrure 14 afin de participer à l'estimation du degré d'humidité relative dans l'enceinte du boîtier de la montre. En outre, le dispositif de détermination 14 peut être un dispositif portatif ou mobile, c'est-à-dire un dispositif 14 apte à être porté par un utilisateur sans nécessiter de raccordement filaire pour son alimentation électrique.

D'autre part, ce dispositif de détermination 14 peut comprendre un élément d'affichage apte à afficher plusieurs signaux visuels distincts en fonction de la valeur du degré d'humidité relative déterminée par l'unité de contrôle 7. Chaque signal visuel affiché par l'élément d'affichage correspond alors, selon les cas, à une valeur de degré d'humidité relative prédéterminée, ou à une valeur différentielle d'humidité relative prédéterminée. Cet élément d'affichage peut être un écran pourvu de diodes électroluminescentes ou peut correspondre plus simplement à des indicateurs lumineux à diodes électroluminescentes, l'allumage d'une diode donnée correspondant à un seuil d'humidité relative prédéterminé.

## Revendications

1. Ensemble de mesure (1) d'un degré d'humidité relative à l'intérieur d'une montre (2), comprenant ladite montre (2) pourvue d'un mouvement (10) et un dispositif de détermination (4) du degré d'humidité présent dans l'enceinte (9) d'un boîtier (3) de cette montre (2),
**caractérisé en ce que** le dispositif de détermination (4) comprend:
- un module récepteur (6a, 6b, 6c) d'au moins un signal acoustique provenant d'un composant horloger (11) dudit mouvement (10), et
- une unité de contrôle (7) connectée audit module récepteur (6a, 6b, 6c),
ladite unité de contrôle (7) étant configurée pour exécuter un modèle d'évaluation d'un taux de vapeur d'eau présent dans un fluide gazeux compris dans ladite enceinte (9) à partir dudit au moins un signal acoustique reçu par le module récepteur (6a, 6b, 6c).

2. Ensemble de mesure (1) selon la revendication précédente, **caractérisé en ce que** le module récepteur comprend un microphone à pression (6a) ou un microphone à gradient de pression (6b).

3. Ensemble de mesure (1) selon l'une quelconque des revendications précédentes, **caractérisé en ce que** le module récepteur comprend un microphone optique (6c).

4. Ensemble de mesure (1) selon la revendication précédente, **caractérisé en ce que** le microphone optique (6c) comprend une source de rayonnement électromagnétique, des éléments réfléchissants tels que des miroirs, au moins un détecteur de ce rayonnement électromagnétique et un interféromètre.

5. Ensemble de mesure (1) selon l'une quelconque des revendications précédentes, **caractérisé en ce qu'**il comprend un module émetteur (5) pourvu d'une source de rayonnement lumineux apte à émettre des faisceaux lumineux (8) vers le mouvement (10) de la montre (2).

6. Ensemble de mesure (1) selon la revendication précédente, **caractérisé en ce que** la source de rayonnement lumineux est une source laser.

7. Ensemble de mesure (1) selon l'une quelconque des revendications précédentes, **caractérisé en ce qu'**il comprend un module émetteur (5) pourvu d'une source de rayonnement acoustique apte à envoyer un signal acoustique dans la montre (2) en particulier vers le mouvement (10) de cette montre (2).

8. Ensemble de mesure (1) selon l'une quelconque des revendications 5 à 7, **caractérisé en ce que** le module émetteur (5) est connecté à ladite unité de contrôle (7).

9. Ensemble de mesure (1) selon l'une quelconque des revendications précédentes, **caractérisé en ce que** l'unité de contrôle (7) comprend dans ses éléments de mémoire un algorithme d'apprentissage d'évaluation d'un degré d'humidité relative à l'intérieur d'une montre en fonction de caractéristiques de signatures/identités sonores issues du traitement des signaux acoustiques reçus par le module récepteur (6a, 6b, 6c).

10. Ensemble de mesure (1) selon la revendication précédente, **caractérisé en ce que** le modèle est généré par ledit algorithme exécuté par l'unité de contrôle (7).

11. Ensemble de mesure (1) selon l'une quelconque des revendications précédentes, **caractérisé en ce que** l'unité de contrôle (7) est configurée pour déterminer une valeur d'entrée de ce modèle qui est ici une valeur du signal acoustique mesurée par le module récepteur (6a à 6c).

12. Ensemble de mesure (1) selon l'une quelconque des revendications précédentes, **caractérisé en ce que** l'unité de contrôle (7) est configurée pour obtenir une valeur de sortie résultant de l'exécution du modèle avec la valeur d'entrée, ladite valeur de sortie comprenant le taux de vapeur d'eau présent dans le fluide gazeux compris dans l'enceinte du boîtier.

13. Ensemble de mesure (1) selon l'une quelconque des revendications précédentes, **caractérisé en ce que** le fluide gazeux est de l'air comprenant de la vapeur d'eau.

## Patentansprüche

1. Messanordnung (1) für einen relativen Feuchtigkeitsgrad im Inneren einer Uhr (2), umfassend die Uhr (2), die mit einem Uhrwerk (10) und einer Bestimmungsvorrichtung (4) für den Feuchtigkeitsgrad, der in dem Gehäusebereich (9) eines Uhrengehäuses (3) der Uhr (2) vorhanden ist, versehen ist, **dadurch gekennzeichnet, dass** die Bestimmungsvorrichtung (4) Folgendes umfasst:
- ein Empfängermodul (6a, 6b, 6c) für mindestens ein akustisches Signal, das von einer Uhrenkomponente (11) des Uhrwerks (10) stammt, und
- eine Steuereinheit (7), die mit dem Empfängermodul (6a, 6b, 6c) verbunden ist,
wobei die Steuereinheit (7) dazu konfiguriert ist, ein Modell zur Bewertung einer Wasserdampfrate, die in einem im Gehäusebereich (9) enthaltenen gasförmigen Fluid vorhanden ist, aus dem mindestens einen akustischen Signal, das von dem Empfängermodul (6a, 6b, 6c) empfangen wird, auszuführen.

2. Messanordnung (1) nach dem vorhergehenden Anspruch, **dadurch gekennzeichnet, dass** das Empfängermodul ein Druckmikrofon (6a) oder ein Druckgradientenmikrofon (6b) umfasst.

3. Messanordnung (1) nach einem der vorhergehenden Ansprüche, **dadurch gekennzeichnet, dass** das Empfängermodul ein optisches Mikrofon (6c) umfasst.

4. Messanordnung (1) nach dem vorhergehenden Anspruch, **dadurch gekennzeichnet, dass** das optische Mikrofon (6c) eine Quelle elektromagnetischer Strahlung, reflektierende Elemente wie Spiegel, mindestens einen Detektor dieser elektromagnetischen Strahlung und ein Interferometer umfasst.

5. Messanordnung (1) nach einem der vorhergehenden Ansprüche, **dadurch gekennzeichnet, dass** sie ein Sendermodul (5) umfasst, das mit einer Lichtstrahlungsquelle versehen ist, die ausgelegt ist, Lichtbündel (8) in Richtung des Uhrwerks (10) der Uhr (2) auszusenden.

6. Messanordnung (1) nach dem vorhergehenden Anspruch, **dadurch gekennzeichnet, dass** die Lichtstrahlungsquelle eine Laserquelle ist.

7. Messanordnung (1) nach einem der vorhergehenden Ansprüche, **dadurch gekennzeichnet, dass** es ein Sendermodul (5) umfasst, das mit einer Quelle akustischer Strahlung versehen ist, die ausgelegt ist, ein akustisches Signal in die Uhr (2), insbesondere in Richtung des Uhrwerks (10) der Uhr (2), zu senden.

8. Messanordnung (1) nach einem der Ansprüche 5 bis 7, **dadurch gekennzeichnet, dass** das Sendemodul (5) mit der Steuereinheit (7) verbunden ist.

9. Messanordnung (1) nach einem der vorhergehenden Ansprüche, **dadurch gekennzeichnet, dass** die Steuereinheit (7) in ihren Speicherelementen einen Lernalgorithmus zur Bewertung eines relativen Feuchtigkeitsgrads im Inneren einer Uhr in Abhängigkeit von Eigenschaften von klanglichen Signaturen/Identitäten, die sich aus der Verarbeitung der vom Empfängermodul (6a, 6b, 6c) empfangenen akustischen Signale ergeben, umfasst.

10. Messanordnung (1) nach dem vorhergehenden Anspruch, **dadurch gekennzeichnet, dass** das Modell durch den von der Steuereinheit (7) ausgeführten Algorithmus erzeugt wird.

11. Messanordnung (1) nach einem der vorhergehenden Ansprüche, **dadurch gekennzeichnet, dass** die Steuereinheit (7) dazu konfiguriert ist, einen Eingangswert des Modells zu ermitteln, der hier ein Wert des vom Empfängermodul (6a bis 6c) gemessenen akustischen Signals ist.

12. Messanordnung (1) nach einem der vorhergehenden Ansprüche, **dadurch gekennzeichnet, dass** die Steuereinheit (7) dazu konfiguriert ist, einen Ausgangswert zu erhalten, der sich aus der Ausführung des Modells mit dem Eingangswert ergibt, wobei der Ausgangswert die Wasserdampfrate enthält, die in dem im Gehäusebereich des Gehäuses enthaltenen gasförmigen Fluid vorhanden ist.

13. Messanordnung (1) nach einem der vorhergehenden Ansprüche, **dadurch gekennzeichnet, dass** das gasförmige Fluid Luft ist, in der Wasserdampf enthalten ist.

## Claims

1. Assembly (1) for measuring a relative humidity level inside a watch (2), comprising said watch (2) provided with a movement (10) and a device (4) for determining the humidity level present in the enclosure (9) of a case (3) of this watch (2), **characterized in that** the determination device (4) comprises:
- a receiver module (6a, 6b, 6c) for receiving at least one acoustic signal from a timepiece component (11) of said movement (10), and
- a control unit (7) connected to said receiver module (6a, 6b, 6c),
said control unit (7) being configured to run a model for evaluating a water vapour content of a gaseous fluid contained inside said enclosure (9) based on said at least one acoustic signal received by the receiver module (6a, 6b, 6c).

2. Measurement assembly (1) according to the preceding claim, **characterised in that** the receiver module comprises a pressure microphone (6a) or a pressure-gradient microphone (6b).

3. Measurement assembly (1) according to any one of the preceding claims, **characterised in that** the receiver module comprises an optical microphone (6c).

4. Measurement assembly (1) according to the preceding claim, **characterised in that** the optical microphone (6c) comprises a source of electromagnetic radiation, reflective elements such as mirrors, at least one detector for detecting this electromagnetic radiation and an interferometer.

5. Measurement assembly (1) according to any one of the preceding claims, **characterised in that** it comprises an emitter module (5) provided with a source of light radiation capable of emitting light beams (8) to the movement (10) of the watch (2).

6. Measurement assembly (1) according to the preceding claim, **characterised in that** the source of light radiation is a laser source.

7. Measurement assembly (1) according to any one of the preceding claims, **characterised in that** it comprises an emitter module (5) provided with a source of acoustic radiation capable of sending an acoustic signal into the watch (2), in particular to the movement (10) of this watch (2).

8. Measurement assembly (1) according to any one of claims 5 to 7, **characterised in that** the emitter module (5) is connected to said control unit (7).

9. Measurement assembly (1) according to any one of the preceding claims, **characterised in that** the control unit (7) comprises, in the memory elements thereof, a learning algorithm for evaluating a relative humidity level inside a watch as a function of sound identity/signature characteristics derived from the processing of the acoustic signals received by the receiver module (6a, 6b, 6c).

10. Measurement assembly (1) according to the preceding claim, **characterised in that** the model is generated by said algorithm run by the control unit (7).

11. Measurement assembly (1) according to any one of the preceding claims, **characterised in that** the control unit (7) is configured to determine an input value for this model, which in this case is a value of the acoustic signal measured by the receiver module (6a to 6c).

12. Measurement assembly (1) according to any one of the preceding claims, **characterised in that** the control unit (7) is configured to obtain an output value resulting from running the model with the input value, said output value comprising the water vapour content of the gaseous fluid contained inside the enclosure of the case.

13. Measurement assembly (1) according to any one of the preceding claims, **characterised in that** the gaseous fluid is air containing water vapour.
